# EUROPÄISCHE PATENTSCHRIFT

(11) **EP 3 835 081 B1**
(45) Veröffentlichungstag und Bekanntmachung des Hinweises auf die Patenterteilung: **08.02.2023**
(21) Anmeldenummer: 19214816.1
(22) Anmeldetag: 10.12.2019
(51) Int. Cl.: B60B 35/00, F16D 65/00, F16D 55/2265

(54) **NUTZFAHRZEUGACHSE MIT EINER SCHEIBENBREMSE**
UTILITY VEHICLE AXLE WITH A DISC BRAKE
ESSIEU DE VÉHICULE UTILITAIRE DOTÉ D'UN FREIN À DISQUE

(43) Veröffentlichungstag der Anmeldung: 16.06.2021
(73) Patentinhaber: ZF CV Systems Europe BV, 1170 Brussels (BE)
(72) Erfinder: HENNING, Paul, 68723 Schwetzingen (DE)
(74) Vertreter: Rabe, Dirk-Heinrich

(56) Entgegenhaltungen:
- EP-A1- 0 936 372
- WO-A1-02/102643
- FR-A1- 2 755 195

## Beschreibung

Die Erfindung betrifft eine Nutzfahrzeugachse mit einer Scheibenbremse, wobei die Scheibenbremse einen Bremssattel und Bremsbeläge zum Zuspannen der Bremsscheibe aufweist und wobei der Bremssattel einen ersten Innenraum mit einer Öffnung auf der einer Bremsscheibe zugewandten Seite zur Aufnahme einer Zuspanneinrichtung aufweist, und der Bremssattel einen zweiten Innenraum zur Aufnahme der Bremsscheibe aufweist.

Nutzfahrzeugachsen mit einer Scheibenbremse der eingangs genannten Art sind aus der DE 10 2012 016 712 A1 bekannt. Die Scheibenbremse weist einen Bremssattel für eine Gleitsattelscheibenbremse auf. Mittels zwei in dem Bremssattel eingelassenen Bolzenführungen gleitet der Bremssattel axial in Richtung der Bremsscheibe auf Führungsbolzen eines Bremsträgers der Scheibenbremse und spannt die Bremsscheibe während eines Bremsvorgangs zu. Der Bremsträger weist zwei sich gegenüberliegende Bremsbelagschächte zur Aufnahme und Anordnung der Bremsbeläge auf. Die Bremsbeläge werden im Bremsträger axial verschiebbar geführt und abgestützt. Die Halterung der Bremsbeläge erfolgt durch einen Belagniederhaltebügel und durch Niederhaltefedern. Nachteilig an Bremsenträgern für Nutzfahrzeuge, insbesondere für schwere Nutzfahrzeuge, ist das hohe Eigengewicht von mindestens 9 kg. Innerhalb des ersten Innenraums ist ein als Zuspanneinrichtung ausgebildeter Aktuator angeordnet, der den zuspannseitigen Bremsbelag über die Öffnung des ersten Innenraums zuspannt. Aktuelle Zuspanneinrichtungen benötigen zur Anordnung einen hohen Bauraumbedarf in dem Bremssattel. Als Zuspannseite ist diejenige Seite der Scheibenbremse definiert, an der die Zuspanneinrichtung in der Scheibenbremse angeordnet ist. Als Reaktionsseite ist die der Zuspannseite gegenüberliegende Seite der Scheibenbremse definiert. Zur Korrektur des Belagverschleißes der Bremsbeläge weist die Zuspanneinrichtung der Scheibenbremse eine Nachstellvorrichtung auf. Die Nachstellvorrichtung ist dazu ausgelegt, ein Lüftspiel, also der Abstand zwischen dem Bremsbelag und der Bremsscheibe, konstant zu halten. Die Nachstellung erfolgt bei modernen Scheibenbremsen automatisch. Die Nachstellvorrichtung ist wie die Zuspanneinrichtung in dem ersten Innenraum des Bremssattels oder in einem als Boxkern ausgestalteten zusätzlichen Innenraum des Bremssattels angeordnet, sodass der Bremssattel zur Aufnahme der Zuspanneinrichtung und der Nachstellvorrichtung axial und radial ausreichend groß dimensioniert sein muss.

Weiterhin sind Nutzfahrzeugachsen zur Anbindung einer eingangs genannten Scheibenbremse bekannt. Die Nutzfahrzeugachsen weisen an einem Radträger eine erste Flanschfläche und eine zweite Flanschfläche zum Anflanschen eines Bremsträgers der Scheibenbremse auf. Sowohl der Bremsträger, als auch die Flanschflächen der Nutzfahrzeugachse weisen Durchgangsöffnungen auf, wobei die Durchgangsöffnungen des Bremsträgers und die Durchgangsöffnungen der Nutzfahrzeugachse in einer Flucht angeordnet sind. Zwei Schraubenelemente fixieren den Bremsträger über die Durchgangsöffnungen mit der Nutzfahrzeugachse. Eine Weiterbildung der Anbindung einer Scheibenbremse an eine Nutzfahrzeugachse geht aus der DE 10 2015 002 892 A1 hervor. Die DE 10 2015 002 892 A1 beschreibt eine Lösung zur Verhinderung eines vorzeitigen Lösens einer Schraube aus der Durchgangsöffnung. Ein vorzeitiges Lösen der Schraube kann unter anderen durch eine Fahrt über Schlechtwegstrecken auftreten. Die DE 10 2015 002 892 A1 löst das Problem dadurch, dass die erste Durchgangsöffnung in einem ersten Bereich eine geringere lichte Weite hat als in einem zweiten Bereich, wobei der erste Bereich näher an der ersten Flanschfläche liegt als der zweite Bereich.

### Geänderte Seiten 3 und 4, sowie neue Seite 3a (Reinfassung)

Die EP 0 936 372 A1 offenbart eine Scheibenbremse, die einen Bremssattel mit zwei Bolzenführungen aufweist und wobei die Scheibenbremse über die zwei Bolzenführungen an einem Radträger einer Fahrzeugachse angeordnet ist.

Nachteilig an den vorgeschlagenen Lösungen sind die Größe der Scheibenbremse und der erforderliche Bauraum in einem Nutzfahrzeug zur Anordnung der Scheibenbremse an einer Nutzfahrzeugachse.

Es hat sich gezeigt, dass insbesondere durch die Elektrifizierung der Nutzfahrzeuge, die bisher in einem Fahrzeug verbauten Nutzfahrzeugachsen und Scheibenbremsen zu schwer und zu groß sind und den aktuellen Anforderungen von bauraumoptimierten und leichten Nutzfahrzeugen nicht mehr gerecht werden.

Aufgabe der Erfindung ist es eine kosten - und bauraumoptimierte Nutzfahrzeugachse mit einer Scheibenbremse bereit zu stellen, wobei die Scheibenbremse leicht an eine Nutzfahrzeugachse montiert werden kann.

Gelöst wird die Aufgabe durch eine Nutzfahrzeugachse mit einer Scheibenbremse mit einem Bremssattel, wobei der Bremssattel eine erste Bolzenführung und eine zweite Bolzenführung aufweist und der Bremssattel über die erste Bolzenführung und über die zweite Bolzenführung an einem Radträger der Nutzfahrzeugachse angeordnet ist. Die direkte Anbindung des Bremssattels an den Radträger ohne einen zusätzlichen Bremsträger verkleinert den benötigten Bauraum zur Anbindung der Scheibenbremse an die Nutzfahrzeugachse. Der frei gewordene Bauraum kann mit anderen Komponenten versehen werden. Der Wegfall des Bremsträgers der Scheibenbremse senkt das Gesamtgewicht des Nutzfahrzeugs, wobei sich dieses reduzierte Gesamtgewicht des Nutzfahrzeugs positiv auf den Kraftstoffverbrauch des Nutzfahrzeugs auswirkt

In einer weiteren vorteilhaften Ausgestaltung weist die erste Bolzenführung ein in Richtung einer Bremsscheibe geschlossenes Bolzenführungsloch oder ein der Bremsscheibe abgewandtes geschlossenes Bolzenführungsloch auf und die zweite Bolzenführung weist ein in Richtung der Bremsscheibe geschlossenes oder ein der Bremsscheibe abgewandtes weiteres Bolzenführungsloch auf. Durch die bremsscheibenseitig geschlossenen Bolzenführungslöcher können keine Verschmutzungen, wie der Abrieb von den Bremsbelägen, bremsscheibenseitig in das Bohrloch der ersten Bolzenführung und in das Bohrloch der zweiten Bolzenführung eindringen. Für eine einfache Herstellung der ersten Bolzenführung und der zweiten Bolzenführung hat sich die Herstellung der Bohrlöcher mittels Gussverfahren als besonders vorteilhaft erwiesen. Die während des Herstellungsverfahrens des Bremssattels gegossenen Bohrlöcher können nach Bedarf zusätzlich mit einem Werkzeug, zum Beispiel einem Fräser, bearbeitet werden. Die Bohrlöcher sind bevorzugt als Sacklochbohrungen ausgebildet. Ein zusätzliches Verschließen der bremsscheibenseitigen Öffnungen der Bohrlöcher ist nicht mehr erforderlich.

Erfindungsgemäß weist der Radträger einen ersten Führungsbolzen zur Aufnahme der ersten Bolzenführung auf und weiterhin weist der Radträger einen zweiten Führungsbolzen zur Aufnahme der zweiten Bolzenführung auf. Eine zusätzliche Flanschfläche an der Scheibenbremse entfällt mit der Ausführung. Zudem sind keine zusätzlichen Mittel zur Anbindung der Scheibenbremse an den Radträger erforderlich. Unter weitere Mittel sind beispielsweise Schrauben oder andere lösbare Verbindungsmittel zu verstehen.

In einer weiteren Ausgestaltung sind der erste Führungsbolzen und der zweite Führungsbolzen mit einem Verfahren wie Schmieden oder Gießen an dem Radträger angeordnet. Die genannten Verfahren eignen sich besonders gut für eine dauerhafte und eine stark beanspruchte Verbindung zwischen dem Radträger, sowie dem ersten Führungsbolzen und dem zweiten Führungsbolzen.

In einer Alternativausführung ist der erste Führungsbolzen über eine erste Bolzenschraube an dem Radträger angeordnet und der zweite Führungsbolzen ist über eine zweite Bolzenschraube an dem Radträger angeordnet. Mit der Alternativausführung kann die Montage oder die Demontage der Scheibenbremse von dem Radträger der Nutzfahrzeugachse auch mit einem kleinen Einbauraum realisiert werden, da der erste Führungsbolzen und der zweite Führungsbolzen eigenständige Bauteile sind und unabhängig von dem Radträger in die erste Bolzenführung und in die zweite Bolzenführung verbaut werden.

Es hat sich in einer weiteren Ausgestaltung als Vorteil erwiesen, dass der erste Führungsbolzen teilweise in dem Bolzenführungsloch der ersten Bolzenführung angeordnet ist und dass der zweite Führungsbolzen teilweise in dem Bolzenführungsloch der zweiten Bolzenführung angeordnet ist. Der bremsscheibenseitige Grund des Bohrlochs der ersten Bolzenführung und der teilweise in das Bohrloch geführte erste Führungsbolzen sind zueinander axial mit einer Länge von 20 mm beabstandet. Zudem sind auch der bremsscheibenseitige Grund des Bohrlochs der zweiten Bolzenführung und der teilweise in das Bohrloch geführte zweite Führungsbolzen axial zueinander mit einer axialen Länge von 20 mm beabstandet. Mit der axialen Länge von 20 mm wird eine axiale Verschiebung des Bremssattels in Richtung der Bremsscheibe oder entgegen der Richtung der Bremsscheibe gewährleistet. Die axiale Länge ist nicht auf 20 mm festgelegt, sondern kann je nach Anforderung und Ausgestaltung der Scheibenbremse, insbesondere der notwendigen Bremsbelagdicke und des Bremsscheibenverschleißmaßes variieren. Als Bremsscheibenverschleißmaß ist der Verschleiß der Bremsscheibe definiert, der durch in Kontaktbringen der Bremsscheibe mit den Bremsbelägen entsteht.

In einer weiteren Ausführung sind der erste Führungsbolzen rechtwinklig zu einer Flanschfläche des Bremssattels ausgebildet und der zweite Führungsbolzen ist rechtwinklig zur Flanschfläche des Bremssattels angeordnet. ausgebildet. Durch die rechtwinklige Ausbildung des ersten Führungsbolzen und rechtwinklige Ausbildung des zweiten Führungsbolzen kann die Scheibenbremse direkt in einem Bauteil an den Radträger der Nutzfahrzeugachse angeschmiedet oder angegossen werden. Durch die direkte Anbindung des Bremssattels an die Nutzfahrzeugachse entfällt ein Bremsenträger der Scheibenbremse, wodurch mehr Bauraum im Bereich einer Radnabe der Fahrzeugachse entsteht. Zum Austausch einer Bremsscheibe der Scheibenbremse wird die Scheibenbremse - bei gleichzeitigem axialen Ausbau der Bremsscheibe - von der Nutzfahrzeugachse axial demontiert / montiert. Die Bremsscheibe kann aber auch im ersten Schritt radial ausgebaut werden und anschließend wird der Bremssattels von der Nutzfahrzeugachse axial demontiert / montiert.

In einer Alternativausbildung sind der erste Führungsbolzen und der zweite Führungsbolzen entlang einer axialen Bremssattelachse geradlinig ausgebildet. Die geradlinige Ausbildung des ersten Führungsbolzens und die geradlinige Ausbildung des zweiten Führungsbolzens weisen den Vorteil auf, dass die Montage / Demontage des Bremssattels - auch mit bereits auf die Nutzfahrzeugachse vormontierter Bremsscheibe - radial erfolgen kann.

Der Bremssattel ist in einer weiteren Ausführung über die erste Bolzenführung und über die zweite Bolzenführung, axial entlang einer Bremssattelachse, gleitend auf dem Radträger gelagert. Der erste Führungsbolzen und der zweite Führungsbolzen weisen zusätzlich die Funktion auf, den Bremssattel entlang der axialen Bremssattelachse in Richtung der Bremsbeläge oder entgegen der Richtung der Bremsbeläge der axialen Bremssattelachse zu verschieben. Die Verschiebung des Bremssattels wird durch den 20 mm großen Abstand zwischen einem Sacklochboden der ersten Bolzenführung, bezogen auf den ersten Führungsbolzen, und durch den 20 mm großen Abstand zwischen einem Sacklochboden der zweiten Bolzenführung, bezogen auf den zweiten Führungsbolzen erreicht. Weitere Führungsbolzen oder Bauteile, wie ein Bremsträger zum Führen des Bremssattels, sind nicht erforderlich.

In einer weiteren vorteilhaften Ausbildung ist im Bereich einer Öffnung des Bolzenführungslochs der ersten Bolzenführung ein erstes Dichtelement entlang des Umfangs des ersten Führungsbolzens angeordnet und im Bereich einer Öffnung des Bolzenführungslochs der zweiten Bolzenführung ist ein zweites Dichtelement entlang des Umfangs des zweiten Führungsbolzens angeordnet. Die Dichtung verhindert das Eindringen von Umwelteinflüssen, wie Schmutz, Schnee, Wasser. Die Umwelteinflüsse können die Funktionsweise der ersten Bolzenführung mit dem ersten Führungsbolzen und der zweiten Bolzenführung mit dem zweiten Führungsbolzen zu beinträchtigen. Durch das erste Dichtelement und das zweite Dichtelement wird die Lebensdauer der Scheibenbremse verlängert, da Umwelteinflüsse nicht oder nur bedingt durch das erste Dichtelement in die erste Bolzenführung eindringen können und Umwelteinflüsse nicht oder nur bedingt durch das zweite Dichtelement in die zweite Bolzenführung eindringen können.

In einer weiteren Ausführung ist das erste Dichtelement über eine an der Umfangsfläche des ersten Führungsbolzen eingebrachte Nut befestigt und das das zweite Dichtelement ist über eine an der Umfangsfläche des zweiten Führungsbolzen eingebrachte Nut befestigt. Durch die direkte Anbindung des ersten Dichtelements in die Nut des ersten Führungsbolzens und die direkte Anbindung des zweiten Dichtelements in die Nut des zweiten Führungsbolzens entfallen zusätzliche Bauteile. Zudem wird die Fehlerrate - z. B. ausgelöst durch zu geringe Anzugsmomente der Bauteile - in der Montage minimiert, die zu einer Undichtigkeit des ersten Dichtelements und des zweiten Dichtelements führen können.

Es hat sich als Vorteil erwiesen, dass in einer weiteren Ausgestaltung das erste Dichtelement über ein erstes Einschraubelement, im Bereich der Öffnung des Bolzenführungslochs, an der ersten Bolzenführung fixiert ist und das das zweite Dichtelement über ein zweites Einschraubelement, im Bereich der Öffnung des zweiten Bolzenführungslochs, an der zweiten Bolzenführung fixiert ist. Das erste Dichtelement ist bereits auf dem ersten Führungsbolzen vormontiert und das zweite Dichtelement ist auf dem zweiten Führungsbolzen vormontiert. Während der Montage oder Demontage des Bremssattels sind lediglich das erste Einschraubelement von der ersten Bolzenführung und das zweite Einschraubelement von der zweiten Bolzenführung abzuschrauben. Der Bremssattel kann anschließend ohne weitere Montageschritte, wie das Lösen einer Verschraubung, von dem ersten Führungsbolzen und dem zweiten Führungsbolzen des Radträgers abgezogen werden.

In einer weiteren Ausführung sind das erste Einschraubelement und das zweite Einschraubelement als Überwurfmutter ausgebildet. Überwurfmuttern zeichnen sich besonders durch ihre Dichtheit in Verbindung mit einer Dichtung auf. Durch die Verwendung einer als erstes Einschraubelement ausgebildeten ersten Überwurfmutter mit einem ersten Dichtelement wird die erste Bolzenführung besonders gut gegen das Eindringen von Umwelteinflüssen abgedichtet und einer als zweites Einschraubelement ausgebildeten zweiten Überwurfmutter mit einem zweiten Dichtelement wird die zweite Bolzenführung besonders gut gegen das Eindringen von Umwelteinflüssen abgedichtet.

In einer alternativen Ausgestaltung weist das erste Dichtelement eine Klemmfläche auf und die Klemmfläche ist zwischen dem ersten Führungsbolzen und der ersten Bolzenführung eingespannt und dass das zweite Dichtelement weist eine Klemmfläche auf, wobei die Klemmfläche zwischen dem zweiten Führungsbolzen und der zweiten Bolzenführung eingespannt ist. Während der Montage wird die Klemmfläche des ersten Führungsbolzens mit dem ersten Führungsbolzen in die erste Bolzenführung des Bremssattels eingebracht bzw. eingepresst und die Klemmfläche des zweiten Führungsbolzens wird mit dem ersten Führungsbolzen in die erste Bolzenführung des Bremssattels eingebracht bzw. eingepresst.

Die Alternativausführung des ersten Dichtelements und die Alternativausführung des zweiten Dichtelements ist für eine einmalige Montage vorgesehen. Mit der einmaligen Montage des ersten Dichtelements und der einmaligen Montage des zweiten Dichtelements ist ein Eindringen von Umwelteinflüssen in die erste Bolzenführung und in die zweite Bolzenführung nicht mehr möglich ist. Eine Demontage ist nur durch Zerstörung des ersten Dichtelements und des zweiten Dichtelements möglich, wodurch die erneute Montage des möglicherweise fehlerbehafteten ersten Dichtelements und/ oder die Montage des möglicherweise fehlerbehafteten zweiten Dichtelements ausgeschlossen wird.

In einer letzten Ausführung ist der Radträger an einer Außenseite des Bremssattels angeordnet ist oder der Radträger ist über eine Montageöffnung des Bremssattels an einer Innenseite des Bremssattels angeordnet. Durch die Ausführung des Radträgers können in der Ausgestaltung und in der Dimension unterschiedliche Bremssättel an den Radträger angeordnet werden. Zudem kann die Nutzfahrzeugachse mit der Scheibenbremse durch die variable Anbindung des Radträgers an den Bremssattel in Nutzfahrzeugen mit unterschiedlich dimensionierten Bauräumen verbaut werden.

Nachfolgend werden ausgewählte Ausführungsbeispiele der Erfindung anhand der beigefügten Figuren erläutert.

Es zeigt:
Fig. 1 eine Nutzfahrzeugachse mit einer Scheibenbremse aus einer seitlichen Ansicht,
Fig. 2 eine Nutzfahrzeugachse mit einer Scheibenbremse nach Fig. 1 aus einer seitlich gedrehten Frontalansicht,
Fig. 3 eine geschnittene Ansicht einer Nutzfahrzeugachse mit einer Scheibenbremse, aufweisend einen ersten Führungsbolzen, aus einer seitlichen Ansicht in einer zweiten Ausführung,
Fig. 3a eine geschnittene Ansicht einer Nutzfahrzeugachse mit einer Scheibenbremse, aufweisend einen zweiten Führungsbolzen, nach Fig. 3 aus einer weiteren seitlichen Ansicht,
Fig. 4 eine Nutzfahrzeugachse mit einer Scheibenbremse nach Fig. 3 und Fig. 3a in einer seitlich gedrehten Frontalansicht,
Fig. 5 eine Nutzfahrzeugachse mit einer Scheibenbremse in einer dritten Ausführung,
Fig. 5a eine Nutzfahrzeugachse mit einer Scheibenbremse nach Fig. 5 aus einer Frontalansicht.

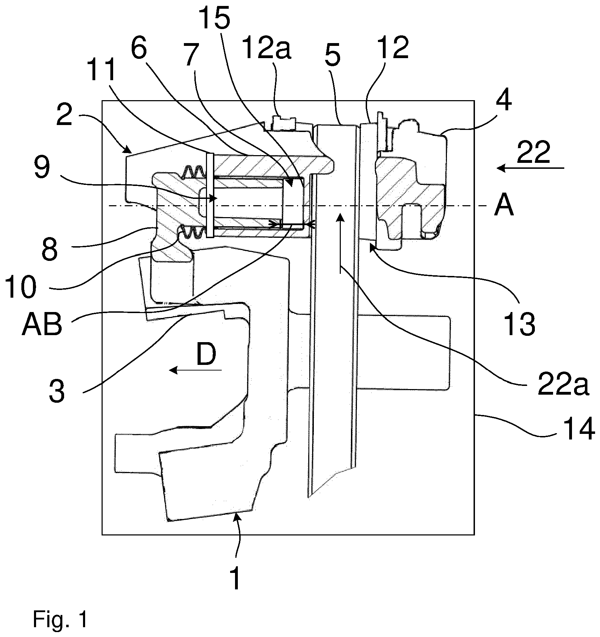

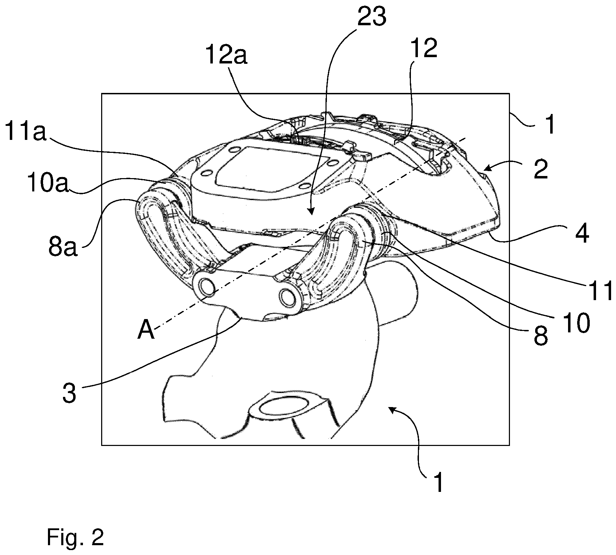

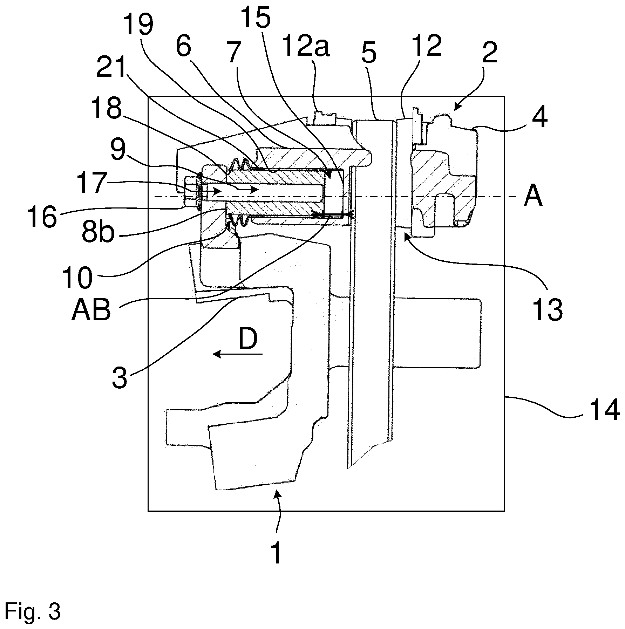

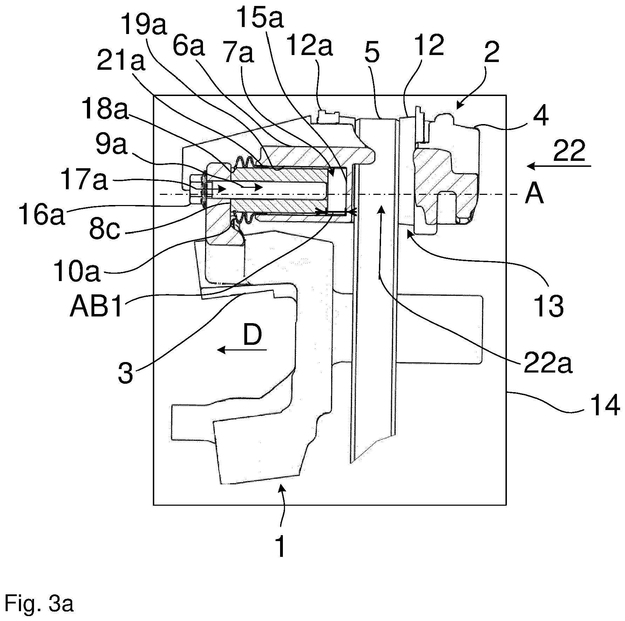

Fig. 1 zeigt eine Nutzfahrzeugachse 1 mit einer an der Nutzfahrzeugachse 1 verbauten Scheibenbremse 2. Ein felgenseitiger Bremsbelag 12 und ein zuspannseitiger Bremsbelag 12a sind mit einer Bremsscheibe 5, axial entlang einer Bremssattelachse A, über eine Montageöffnung 13 eines Bremssattels 4, in dem Bremssattel 4, verbaut. Die Bremsscheibe 5 ist axial zwischen dem felgenseitigen Bremsbelag 12 und dem zuspannseitigen Bremsbelag 12a angeordnet, wobei der felgenseitige Bremsbelag 12 und der zuspannseitige Bremsbelag 12a die Bremsscheibe 5 während eines Bremsvorgangs eines Fahrzeugs 14, in der die Nutzfahrzeugachse 1 mit der Scheibenbremse 2 verbaut ist, zuspannen und das Fahrzeug 14 abbremsen. Der Bremssattel 4 weist weiterhin eine erste Bolzenführung 6 (Fig. 3) und eine zweite Bolzenführung 6a auf. Die erste Bolzenführung 6 weist ein als Sackloch ausgebildetes erstes Bolzenführungsloch 7 auf und die zweite Bolzenführung 6a weist eine als Sackloch ausgebildetes zweites Bolzenführungsloch 7a (Fig. 3a) auf. Zur Befestigung der Scheibenbremse 2 mit dem Bremssattel 4 an einer Außenseite 22 eines Radträgers 3, ist auf einer radabgewandten Seite des Radträgers 3, an dem Radträger 3, ein erster Führungsbolzen 8 und ein zweiter Führungsbolzen 8a (Fig. 2) angegossen. Als radabgewandte Seite ist die Seite des Radträgers 3 definiert, die dem Fahrzeug 14 zugewandt ist. Der erste Führungsbolzen 8 und der zweite Führungsbolzen 8a (Fig. 2) sind rechtwinklig zu einer Flanschfläche 23 (Fig. 2) des Bremssattels 4 ausgebildet. Der erste Führungsbolzen 8 greift axial über eine Öffnung 9 des Bolzenführungslochs 7 der ersten Bolzenführung 6 in die erste Bolzenführung 6. Der zweite Führungsbolzen 8a (Fig. 2) greift axial über eine Öffnung 9a des Bolzenführungslochs 7a der zweiten Bolzenführung 6a in die zweite Bolzenführung 6a (Fig. 2). Die Verschiebung des Bremssattels 4 ist durch einen Abstand AB von 20 mm zwischen einem Grund 15 des Bolzenführungslochs 7 der ersten Bolzenführung 6 und dem ersten Führungsbolzen 8 und einem Abstand AB1 von 20 mm zwischen einem Grund 15a des Bolzenführungslochs 7a der zweiten Bolzenführung 6a und dem zweiten Führungsbolzen 8a (Fig.3 und 3a, wobei der zweite Führungsbolzen 8a als zweiter Führungsbolzen 8c bezeichnet ist) gewährleistet. Gegen das Eindringen von Umwelteinflüssen ist an dem ersten Führungsbolzen 8 ein als Faltenbalg ausgebildetes erstes Dichtelement 10 mit einem als Überwurfmutter ausgebildetes erstes Einschraubelement 11 angeordnet. Auch an dem zweiten Führungsbolzen 8a ist ein als Faltenbalg ausgebildetes zweites Dichtelement 10a mit einem als Überwurfmutter ausgebildeten zweiten Einschraubelements 11a angeordnet (Fig. 2). Nach Anordnung der Scheibenbremse 2 auf dem Radträger 3, wird die erste Überwurfmutter 11 an der Öffnung 9 des Bolzenführungslochs 7 der ersten Bolzenführung 6 angeschraubt und die zweite Überwurfmutter 11a wird an der Öffnung 9a des Bolzenführungslochs 7a der zweiten Bolzenführung 6a angeschraubt (Fig. 2). Zur Demontage D werden die erste Überwurfmutter 11 von der ersten Bolzenführung 6 und die zweite Überwurfmutter 11a von der zweiten Bolzenführung 6a abgeschraubt. Anschließend wird die gesamte Scheibenbremse 2 in einem Stück von dem Radträger 3 der Nutzfahrzeugachse abgezogen.

In Fig. 2 ist die Nutzfahrzeugachse 1 mit der Scheibenbremse 1 aus der Frontalansicht. Die Bremsscheibe 5 wird zur Verdeutlichung der Anbindung des Bremssattels 4 an dem Radträger 3 nicht gezeigt. Insbesondere sieht man hier den achsparallel zueinander angeordneten ersten Führungsbolzen 8 des Radträgers 3 mit dem ersten Dichtelement 10 und den zweiten Führungsbolzen 8a des Radträgers 3 mit dem zweiten Dichtelement 10a.

Fig. 3 und Fig. 3a zeigen eine zweite Ausführung der Nutzfahrzeugachse 1 mit der Scheibenbremse 2 nach Fig. 1 und Fig. 2. In der zweiten Ausführung ist die Scheibenbremse 1 über eine erste Bolzenschraube 16 und einer zweiten Bolzenschraube 16a an dem Radträger 3 gesichert. Zur Montage wird nach Fig. 3 ein mit dem Radträger 3 nicht verbundener erster Führungsbolzen 8b in die Öffnung 9 des Bolzenführungslochs 7 der ersten Bolzenführung 6 verbracht. Das als Faltenbalg ausgebildete erste Dichtelement 10 ist mit einer Seite über eine Nut 18 des ersten Führungsbolzens 8b an dem ersten Führungsbolzen 8b fixiert. Die der ersten Seite gegenüberliegenden zweiten Seite des ersten Dichtelements 10 ist als Klemmfläche 21 ausgebildet und die Klemmfläche 21 ist teilweise in dem Bolzenführungsloch 7 der ersten Bolzenführung 6, zwischen dem ersten Führungsbolzen 8b und einer Innenwand 19 der ersten Bolzenführung 6, angeordnet. Anschließend greift die erste Bolzenschraube 16 über einen ersten Durchgang 17 des Radträgers 3 in dem mit dem Radträger 3 nicht verbundenen ersten Führungsbolzen 8b und fixiert den ersten Führungsbolzen 8b mit dem Radträger 3.

Weiterhin wird in Fig. 3a ein mit dem Radträger 3 nicht verbundener zweiter Führungsbolzen 8c in die Öffnung 9a des Bolzenführungslochs 7a der zweiten Bolzenführung 6a verbracht. Das als Faltenbalg ausgebildete zweite Dichtelement 10a ist mit einer Seite über eine Nut 18a des zweiten Führungsbolzens 8c an dem zweiten Führungsbolzen 8c fixiert. Die der ersten Seite gegenüberliegenden zweiten Seite des zweiten Dichtelements 10a ist als Klemmfläche 21a ausgebildet und die Klemmfläche 21 ist teilweise in dem Bolzenführungsloch 7a der zweiten Bolzenführung 6a, zwischen dem zweiten Führungsbolzen 8a und einer Innenwand 19a der zweiten Bolzenführung 6a, angeordnet. Anschließend greift die zweite Bolzenschraube 16a über einen zweiten Durchgang 17a des Radträgers 3 in dem mit dem Radträger 3 nicht verbundenen zweiten Führungsbolzen 8c und fixiert den zweiten Führungsbolzen 8c mit dem Radträger 3.

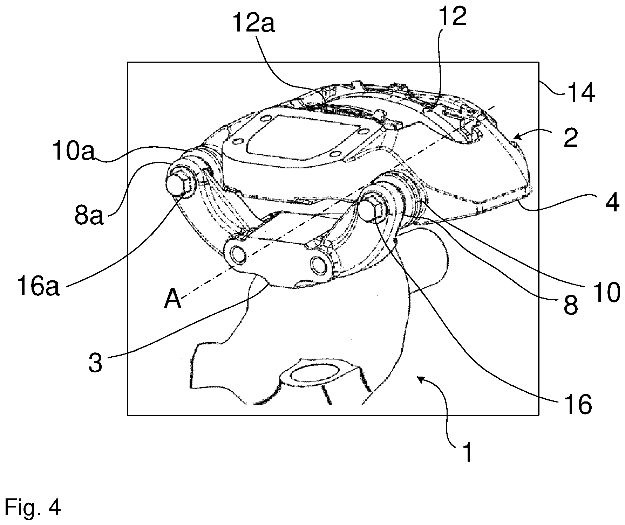

In Fig. 4 ist die zweite Ausführung der Nutzfahrzeugachse 1 mit der Scheibenbremse 2 nach Fig. 3 und Fig. 3a aus einer seitlich gedrehten Frontalansicht gezeigt. Die Bremsscheibe 5 wird zur Verdeutlichung der Anbindung des Bremssattels 4 an dem Radträger 3 nicht gezeigt. Fig.4 verdeutlicht noch einmal, dass der Bremssattel 4 mit der ersten Bolzenführung 6 (Fig. 3) über eine erste Bolzenschraube 16 mit dem Radträger 3 verbunden ist und dass die zweite Bolzenführung 6a über die zweite Bolzenschraube 16a mit dem Radträger verbunden ist. Der Bremssattel 4 ist über die erste Bolzenschraube 16 und der zweiten Bolzenschraube 16a drehgehemmt an dem Bremssattel 4 angeordnet.

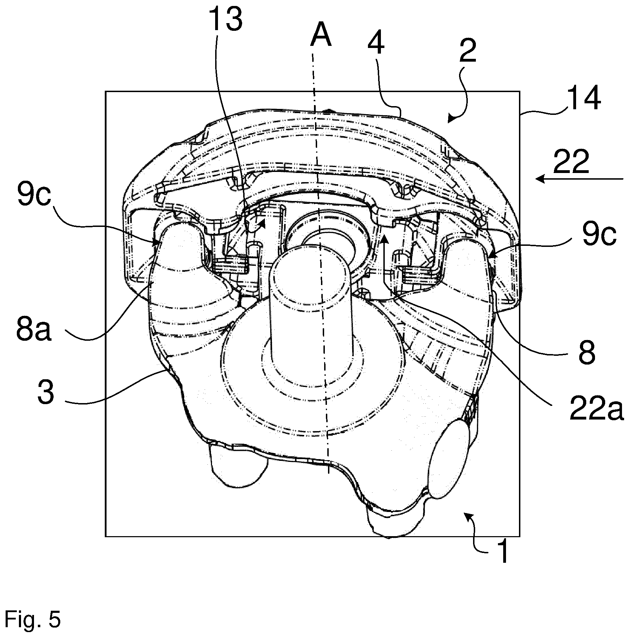

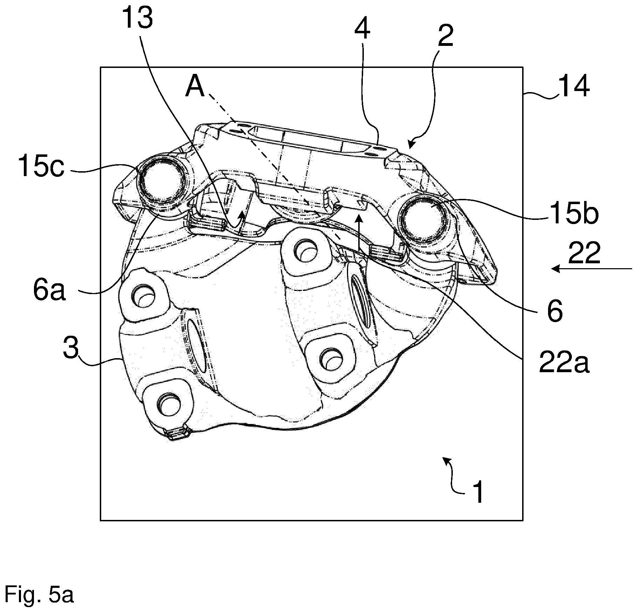

Fig. 5 und Fig. 5a zeigen eine dritte Ausführung der Nutzfahrzeugachse 1 mit einer Scheibenbremse 2 nach Fig. 1 bis Fig. 4.

Die Bremsscheibe 5, der felgenseitige Bremsbelag 12 und der zuspannseitige Bremsbelag 12a werden zur Verdeutlichung der Anbindung des Bremssattels 4 an dem Radträger 3 nicht gezeigt. In der dritten Ausführung ist die Anordnung des Radträgers 3 an einer Innenseite 22a des Bremssattels 4 über die Montageöffnung 13 des Bremssattels 4 gezeigt. Die erste Bolzenführung 6 (Fig. 3) weist eine innenliegende Öffnung 9b des Bolzenführungslochs 7 (Fig. 1) und einen dem Radträger 3 abgewandten Grund 15b auf. Die zweite Bolzenführung 6a (Fig. 3a) weist wiederum eine innenliegende Öffnung 9c des Bolzenführungslochs 7a (Fig.3a) und einen dem Radträger 3 abgewandten Grund 15c auf. Der erste Führungsbolzen 8 ist über die innenliegende Öffnung 9b des Bolzenführungslochs 7 der ersten Bolzenführung 6 an dem Bremssattel 4 angeordnet und der zweite Führungsbolzen 7a ist über die innenliegende Öffnung 9c des Bolzenführungslochs 7a der zweiten Bolzenführung 6a an dem Bremssattel 4 angeordnet.

### Bezugszeichenliste als Teil der Beschreibung

- 1: Nutzfahrzeugachse
- 2: Scheibenbremse
- 3: Radträger
- 4: Bremssattel
- 5: Bremsscheibe
- 6: erste Bolzenführung
- 6a: zweite Bolzenführung
- 7: Bolzenführungsloch der ersten Bolzenführung 6
- 7a: Bolzenführungsloch der zweiten Bolzenführung 6a
- 8, 8b: erster Führungsbolzen
- 8a, 8c: zweiter Führungsbolzen
- 9, 9b: Öffnung des Bolzenführungslochs 7
- 9a, 9c: Öffnung des Bolzenführungslochs 7a
- 10: erstes Dichtelement
- 10a: zweites Dichtelement
- 11: erstes Einschraubelement
- 11a: zweites Einschraubelement
- 12: felgenseitiger Bremsbelag
- 12a: zuspannseitiger Bremsbelag
- 13: Montageöffnung des Bremssattels 4
- 14: Fahrzeug
- 15, 15b: Grund des Bolzenführungslochs 7 der ersten Bolzenführung 6
- 15a, 15c: Grund des Bolzenführungslochs 7a der zweiten Bolzenführung 6a
- 16: erste Bolzenschraube
- 16a: zweite Bolzenschraube
- 17: erster Durchgang des Radträgers 3
- 17a: zweiter Durchgang des Radträgers 3
- 18: Nut des ersten Führungsbolzen 8, 8b
- 18a: Nut des zweiten Führungsbolzen 8a, 8c
- 19: Innenwand der ersten Bolzenführung 6
- 19a: Innenwand der zweiten Bolzenführung 6a
- 21: Klemmfläche des ersten Dichtelements 10
- 21a: Klemmfläche des zweiten Dichtelements 10a
- 22: Außenseite des Bremssattels 4
- 22a: Innenseite des Bremssattels 4
- 23: Flanschfläche des Bremssattels 4
- A: Bremssattelachse
- AB: Abstand zwischen dem Grund 15 und der ersten Bolzenführung 6
- AB1: Abstand zwischen dem Grund 15a und der zweiten Bolzenführung 6a
- D: Demontage des Radträgers 3

## Patentansprüche

1. Nutzfahrzeugachse (1) mit einer Scheibenbremse (2), umfassend einen Radträger (3) zur Anordnung der Scheibenbremse (2) an die Nutzfahrzeugachse (1), und wobei die Scheibenbremse (2) einen Bremssattel (4) mit einer in Richtung einer Bremsscheibe (5) angeordneten ersten Bolzenführung (6) und einer in Richtung der Bremsscheibe (5) angeordneten zweiten Bolzenführung (6a) umfasst, wobei der Bremssattel (4) über die erste Bolzenführung (6) und über die zweite Bolzenführung (6a) an dem Radträger (3) angeordnet ist, **dadurch gekennzeichnet, dass** der Radträger (3) einen ersten Führungsbolzen (8, 8b) zur Aufnahme der ersten Bolzenführung (6) aufweist und dass der Radträger (3) einen zweiten Führungsbolzen (8a, 8c) zur Aufnahme der zweiten Bolzenführung (6a) aufweist.

2. Nutzfahrzeugachse (1) nach Anspruch 1, **dadurch gekennzeichnet, dass** die erste Bolzenführung (6) ein in Richtung der Bremsscheibe (5) geschlossenes Bolzenführungsloch (7) aufweist und das die zweite Bolzenführung (6a) ein in Richtung der Bremsscheibe (5) geschlossenes Bolzenführungsloch (7a) aufweist oder das die erste Bolzenführung (6) ein der Bremsscheibe (5) abgewandtes geschlossenes Bolzenführungsloch (7) aufweist und das die zweite Bolzenführung (6a) ein der Bremsscheibe (5) abgewandtes geschlossenes Bolzenführungsloch (7a) aufweist.

3. Nutzfahrzeugachse (1) nach einem der vorangegangenen Ansprüche, **dadurch gekennzeichnet, dass** der erste Führungsbolzen (8) und der zweite Führungsbolzen (8a) mit einem der Verfahren Schmieden oder Gießen an dem Radträger (3) angeordnet ist.

4. Nutzfahrzeugachse (1) nach einem der Ansprüche 1 oder 2, **dadurch gekennzeichnet, dass** der erste Führungsbolzen (8b) über eine erste Bolzenschraube (16) an dem Radträger (3) angeordnet ist und der zweite Führungsbolzen (8c) über eine zweite Bolzenschraube (16a) an dem Radträger (3) angeordnet ist.

5. Nutzfahrzeugachse (1) nach einem der vorangegangenen Ansprüche, **dadurch gekennzeichnet, dass** der erste Führungsbolzen (8, 8b) teilweise in dem Bolzenführungsloch (7) der ersten Bolzenführung (6) angeordnet ist und dass der zweite Führungsbolzen (8a, 8c) teilweise in dem Bolzenführungsloch (7a) der zweiten Bolzenführung (6a) angeordnet ist.

6. Nutzfahrzeugachse (1) nach einem der vorangegangenen Ansprüche 1 bis 3, **dadurch gekennzeichnet, dass** der erste Führungsbolzen (8) rechtwinklig zu einer Flanschfläche (23) des Bremssattels (4) ausgebildet ist und das der zweite Führungsbolzen (8a) rechtwinklig zu einer Flanschfläche (23) des Bremssattels (4) ausgebildet ist.

7. Nutzfahrzeugachse (1) nach Anspruch 4, **dadurch gekennzeichnet, dass** der erste Führungsbolzen (8b) und der zweite Führungsbolzen (8c) in Richtung einer Bremssattelachse (A) ausgebildet sind.

8. Nutzfahrzeugachse (1) nach einem der vorangegangenen Ansprüche, **dadurch gekennzeichnet, dass** der Bremssattel (4) über die erste Bolzenführung (6) und über die zweite Bolzenführung (6a), axial, entlang der Bremssattelachse (A), gleitend auf dem Radträger (3) gelagert ist.

9. Nutzfahrzeugachse (1) nach einem der vorangegangenen Ansprüche, **dadurch gekennzeichnet, dass** im Bereich einer Öffnung (9, 9b) des Bolzenführungslochs (7) ein erstes Dichtelement (10) entlang des Umfangs des ersten Führungsbolzen (8, 8b) angeordnet ist und das im Bereich einer Öffnung (9a, 9c) eines Bolzenführungslochs (7a) ein zweites Dichtelement (10a) entlang des Umfangs des zweiten Führungsbolzens (8a, 8c) angeordnet ist.

10. Nutzfahrzeugachse (1) nach Anspruch 9, **dadurch gekennzeichnet, dass** das erste Dichtelement (10) über eine an der Umfangsfläche des ersten Führungsbolzens (8, 8b) eingebrachte Nut (18) angeordnet ist und dass das zweite Dichtelement (10a) über eine an der Umfangsfläche des zweiten Führungsbolzen (8a, 8c) eingebrachte Nut (18a) angeordnet ist.

11. Nutzfahrzeugachse (1) nach Anspruch 9 oder 10, **dadurch gekennzeichnet, dass** das erste Dichtelement (10) über ein erstes Einschraubelement (11), im Bereich der Öffnung (9) des Bolzenführungslochs (7), an der ersten Bolzenführung fixiert ist und das das zweite Dichtelement (10) über ein zweites Einschraubelement (11a), im Bereich der Öffnung (9a) des zweiten Bolzenführungslochs (7a), an der zweiten Bolzenführung (6a) fixiert ist.

12. Nutzfahrzeugachse (1) nach Anspruch 11, **dadurch gekennzeichnet, dass** erste Einschraubelement (11) und das zweite Einschraubelement (11a) eine Überwurfmutter ist.

13. Nutzfahrzeugachse (1) nach Anspruch 9 oder 10, **dadurch gekennzeichnet, dass** das erste Dichtelement (10) eine Klemmfläche (21) aufweist und die Klemmfläche (21) zwischen dem ersten Führungsbolzen (8, 8b) und der ersten Bolzenführung (6) eingespannt ist und dass das zweite Dichtelement (10a) eine Klemmfläche (21a) aufweist und die Klemmfläche (21a) zwischen dem zweiten Führungsbolzen (8a, 8c) und der zweiten Bolzenführung (6a) eingespannt ist.

14. Nutzfahrzeugachse (1) nach einem der vorangegangenen Ansprüche, **dadurch gekennzeichnet, dass** der Radträger (3) an einer Außenseite (22) an dem Bremssattel (4) angeordnet ist oder das der Radträger (3) über eine Montageöffnung (13) des Bremssattels (4) an einer Innenseite (22a) des Bremssattels (4) angeordnet ist.

## Claims

1. Commercial vehicle axle (1) comprising a disc brake (2), which commercial vehicle axle comprises a wheel carrier (3) for arranging the disc brake (2) on the commercial vehicle axle (1), and the disc brake (2) comprising a brake caliper (4), which has a first bolt guide (6) arranged in the direction of a brake disc (5) and a second bolt guide (6a) arranged in the direction of the brake disc (5), the brake caliper (4) being arranged on the wheel carrier (3) via the first bolt guide (6) and via the second bolt guide (6a), **characterized in that** the wheel carrier (3) has a first guide bolt (8, 8b) for receiving the first bolt guide (6), and **in that** the wheel carrier (3) has a second guide bolt (8a, 8c) for receiving the second bolt guide (6a).

2. Commercial vehicle axle (1) according to claim 1, **characterized in that** the first bolt guide (6) has a bolt guide hole (7) closed in the direction of the brake disc (5), and **in that** the second bolt guide (6a) has a bolt guide hole (7a) closed in the direction of the brake disc (5), or **in that** the first bolt guide (6) has a closed bolt guide hole (7) facing away from the brake disc (5), and **in that** the second bolt guide (6a) has a closed bolt guide hole (7a) facing away from the brake disc (5).

3. Commercial vehicle axle (1) according to either of the preceding claims, **characterized in that** the first guide bolt (8) and the second guide bolt (8a) are arranged on the wheel carrier (3) by one of the methods of forging or casting.

4. Commercial vehicle axle (1) according to either claim 1 or claim 2, **characterized in that** the first guide bolt (8b) is arranged on the wheel carrier (3) via a first bolt screw (16) and the second guide bolt (8c) is arranged on the wheel carrier (3) via a second bolt screw (16a).

5. Commercial vehicle axle (1) according to any of the preceding claims, **characterized in that** the first guide bolt (8, 8b) is arranged partially in the bolt guide hole (7) of the first bolt guide (6), and **in that** the second guide bolt (8a, 8c) is partially arranged in the bolt guide hole (7a) of the second bolt guide (6a).

6. Commercial vehicle axle (1) according to any of the preceding claims 1 to 3, **characterized in that** the first guide bolt (8) is at a right angle to a flange face (23) of the brake caliper (4), and **in that** the second guide bolt (8a) is at a right angle to a flange face (23) of the brake caliper (4).

7. Commercial vehicle axle (1) according to claim 4, **characterized in that** the first guide bolt (8b) and the second guide bolt (8c) are formed in the direction of a brake caliper axis (A).

8. Commercial vehicle axle (1) according to any of the preceding claims, **characterized in that** the brake caliper (4) is mounted on the wheel carrier (3) via the first bolt guide (6) and via the second bolt guide (6a) so as to slide axially along the brake caliper axis (A).

9. Commercial vehicle axle (1) according to any of the preceding claims, **characterized in that** a first sealing element (10) is arranged along the periphery of the first guide bolt (8, 8b) in the region of an opening (9, 9b) of the bolt guide hole (7), and **in that** a second sealing element (10a) is arranged along the periphery of the second guide bolt (8a, 8c) in the region of an opening (9a, 9c) of a bolt guide hole (7a).

10. Commercial vehicle axle (1) according to claim 9, **characterized in that** the first sealing element (10) is arranged via a groove (18) made in the peripheral surface of the first guide bolt (8, 8b), and **in that** the second sealing element (10a) is arranged via a groove (18a) made in the peripheral surface of the second guide bolt (8a, 8c).

11. Commercial vehicle axle (1) according to either claim 9 or claim 10, **characterized in that** the first sealing element (10) is fixed to the first bolt guide via a first screw-in element (11), in the region of the opening (9) of the bolt guide hole (7), and **in that** the second sealing element (10) is fixed to the second bolt guide (6a) via a second screw-in element (11a), in the region of the opening (9a) of the second bolt guide hole (7a).

12. Commercial vehicle axle (1) according to claim 11, **characterized in that** the first screw-in element (11) and the second screw-in element (11a) is a sleeve nut.

13. Commercial vehicle axle (1) according to either claim 9 or claim 10, **characterized in that** the first sealing element (10) has a clamping surface (21) and the clamping surface (21) is clamped between the first guide bolt (8, 8b) and the first bolt guide (6), and **in that** the second sealing element (10a) has a clamping surface (21a) and the clamping surface (21a) is clamped between the second guide bolt (8a, 8c) and the second bolt guide (6a).

14. Commercial vehicle axle (1) according to any of the preceding claims, **characterized in that** the wheel carrier (3) is arranged on the brake caliper (4) on an outer side (22), or **in that** the wheel carrier (3) is arranged on an inner side (22a) of the brake caliper (4) via an assembly opening (13) of the brake caliper (4).

## Revendications

1. Essieu de véhicule utilitaire (1) comportant un frein à disque (2), comprenant un support de roue (3) pour le placement du frein à disque (2) sur l'essieu de véhicule utilitaire (1), et le frein à disque (2) comprenant un étrier de frein (4) comportant un premier guidage de boulon (6) disposé en direction d'un disque de frein (5) et un second guidage de boulon (6a) disposé en direction du disque de frein (5), l'étrier de frein (4) étant disposé sur le support de roue (3) par l'intermédiaire du premier guidage de boulon (6) et par l'intermédiaire du second guidage de boulon (6a), **caractérisé en ce que** le support de roue (3) présente un premier boulon de guidage (8, 8b) pour la réception du premier guidage de boulon (6) **et en ce que** le support de roue (3) présente un second boulon de guidage (8a, 8c) pour la réception du second guidage de boulon (6a).

2. Essieu de véhicule utilitaire (1) selon la revendication 1,
**caractérisé en ce que** le premier guidage de boulon (6) présente un trou de guidage de boulon (7) fermé en direction du disque de frein (5) **et en ce que** le second guidage de boulon (6a) présente un trou de guidage de boulon (7a) fermé en direction du disque de frein (5) **ou en ce que** le premier guidage de boulon (6) présente un trou de guidage de boulon (7) fermé opposé au disque de frein (5) **et en ce que** le second guidage de boulon (6a) présente un trou de guidage de boulon (7a) fermé opposé au disque de frein (5).

3. Essieu de véhicule utilitaire (1) selon l'une des revendications précédentes, **caractérisé en ce que** le premier boulon de guidage (8) et le second boulon de guidage (8a) sont disposés sur le support de roue (3) à l'aide d'un des procédés parmi le forgeage ou la coulée.

4. Essieu de véhicule utilitaire (1) selon l'une des revendications 1 ou 2, **caractérisé en ce que** le premier boulon de guidage (8b) est disposé sur le support de roue (3) par l'intermédiaire d'une première vis de boulon (16) et le second boulon de guidage (8c) est disposé sur le support de roue (3) par l'intermédiaire d'une seconde vis de boulon (16a).

5. Essieu de véhicule utilitaire (1) selon l'une des revendications précédentes, **caractérisé en ce que** le premier boulon de guidage (8, 8b) est partiellement disposé dans le trou de guidage de boulon (7) du premier guidage de boulon (6) **et en ce que** le second boulon de guidage (8a, 8c) est partiellement disposé dans le trou de guidage de boulon (7a) du second guidage de boulon (6a).

6. Essieu de véhicule utilitaire (1) selon l'une des revendications précédentes 1 à 3, **caractérisé en ce que** le premier boulon de guidage (8) est réalisé perpendiculairement à une surface de bride (23) de l'étrier de frein (4) **et en ce que** le second boulon de guidage (8a) est réalisé perpendiculairement à une surface de bride (23) de l'étrier de frein (4).

7. Essieu de véhicule utilitaire (1) selon la revendication 4,
**caractérisé en ce que** le premier boulon de guidage (8b) et le second boulon de guidage (8c) sont réalisés en direction d'un axe d'étrier de frein (A).

8. Essieu de véhicule utilitaire (1) selon l'une des revendications précédentes, **caractérisé en ce que** l'étrier de frein (4) est monté coulissant sur le support de roue (3), axialement le long de l'axe d'étrier de frein (A), par l'intermédiaire du premier guidage de boulon (6) et par l'intermédiaire du second guidage de boulon (6a).

9. Essieu de véhicule utilitaire (1) selon l'une des revendications précédentes, **caractérisé en ce qu'**un premier élément d'étanchéité (10) est disposé dans la zone d'une ouverture (9, 9b) du trou de guidage de boulon (7) le long de la circonférence du premier boulon de guidage (8, 8b) **et en ce qu'**un second élément d'étanchéité (10a) est disposé dans la zone d'une ouverture (9a, 9c) d'un trou de guidage de boulon (7a) le long de la circonférence du second boulon de guidage (8a, 8c).

10. Essieu de véhicule utilitaire (1) selon la revendication 9,
**caractérisé en ce que** le premier élément d'étanchéité (10) est disposé par l'intermédiaire d'une rainure (18) ménagée sur la surface circonférentielle du premier boulon de guidage (8, 8b) **et en ce que** le second élément d'étanchéité (10a) est disposé par l'intermédiaire d'une rainure (18a) ménagée sur la surface circonférentielle du second boulon de guidage (8a, 8c).

11. Essieu de véhicule utilitaire (1) selon la revendication 9 ou 10, **caractérisé en ce que** le premier élément d'étanchéité (10) est fixé au premier guidage de boulon par l'intermédiaire d'un premier élément de vissage (11) dans la zone de l'ouverture (9) du trou de guidage de boulon (7) **et en ce que** le second élément d'étanchéité (10) est fixé au second guidage de boulon (6a) par l'intermédiaire d'un second élément de vissage (11a) dans la zone de l'ouverture (9a) du second trou de guidage de boulon (7a).

12. Essieu de véhicule utilitaire (1) selon la revendication 11,
**caractérisé en ce que** le premier élément de vissage (11) et le second élément de vissage (11a) sont un écrou-raccord.

13. Essieu de véhicule utilitaire (1) selon la revendication 9 ou 10, **caractérisé en ce que** le premier élément d'étanchéité (10) présente une surface de serrage (21) et la surface de serrage (21) est serrée entre le premier boulon de guidage (8, 8b) et le premier guidage de boulon (6) **et en ce que** le second élément d'étanchéité (10a) présente une surface de serrage (21a) et la surface de serrage (21a) est serrée entre le second boulon de guidage (8a, 8c) et le second guidage de boulon (6a).

14. Essieu de véhicule utilitaire (1) selon l'une des revendications précédentes, **caractérisé en ce que** le support de roue (3) est disposé sur un côté extérieur (22) sur l'étrier de frein (4) **ou en ce que** le support de roue (3) est disposé sur un côté intérieur (22a) de l'étrier de frein (4) par l'intermédiaire d'une ouverture de montage (13) de l'étrier de frein (4).
